# EUROPEAN PATENT APPLICATION

(11) **EP 4 044 023 A1**
(43) Date of publication of application: **17.08.2022**
(21) Application number: 20878782.0
(22) Date of filing: 01.09.2020
(51) Int. Cl.: G06F 8/61, H04L 29/08

(54) **METHODS FOR SENDING AND RECEIVING MICROSERVICE UPGRADE FILE, DEVICE, AND STORAGE MEDIUM**

(30) Priority: 23.10.2019 CN 201911010888
(71) Applicant: ZTE Corporation, Shenzhen, Guangdong 518057 (CN)
(72) Inventor: ZHANG, Zejian, Shenzhen, Guangdong 518057 (CN); RONG, Fang, Shenzhen, Guangdong 518057 (CN); WU, Yonghang, Shenzhen, Guangdong 518057 (CN)
(74) Representative: Swindell & Pearson Limited
(86) International application number: PCT/CN2020/112907
(87) International publication number: WO 2021/077906

(57) **Abstract**

A method for sending and a method for receiving a microservice upgrade file, a device, and a storage medium. The sending method comprises: extracting a shared file used for various microservice upgrades and multiple corresponding private files used for the various microservice upgrades, and packaging the shared file and multiple private files to form a microservice upgrade file output. Only one or a small number of the shared file in the microservice upgrade file is saved.

## Description

### CROSS-REFERENCE TO RELATED APPLICATION

This application is based on and claims the priority of Chinese patent application No. 201911010888. 6 filed on October 23, 2019, the disclosure of which is incorporated herein by reference in its entirety.

### TECHNICAL FIELD

Embodiments of the present disclosure relate to, but are not limited to, the technical field of communication, in particular to methods for sending and receiving a microservice upgrade file, a device and a storage medium.

### BACKGROUND

Microservice architectures are now widely used in various systems. With the microservice architectures, a function is decomposed into discrete services to decouple a solution. A large single application or service is usually split into several or even dozens of microservices.

At present, to realize a version upgrade of a microservice system, typically, each microservice upgrade file is separately stored as a version file, and then all the version files are packaged into a final version file to be released for upgrading. Because of the large number of microservices, the number of version files is large, which will lead to a large final version file and a long time to transmit the final version file. As a result, the upgrade file takes up a lot of disk space and the upgrading efficiency is low.

### SUMMARY

Embodiments of the present disclosure provide methods for sending and receiving a microservice upgrade file, a device and a storage medium.

An embodiment in accordance with an aspect of the present disclosure provides a method for sending a microservice upgrade file, including: acquiring a common file for an upgrade of microservices; acquiring a plurality of private files corresponding to the upgrade of the microservices, respectively; and packaging the common file and the plurality of private files into a microservice upgrade file and outputting the microservice upgrade file.

An embodiment in accordance with another aspect of the present disclosure provides a method for receiving a microservice upgrade file, including: acquiring a microservice upgrade file, the microservice upgrade file including a common file and a plurality of private files; extracting the common file from the microservice upgrade file and storing the common file in a public container of microservices; and extracting the plurality of private files from the microservice upgrade file and storing the plurality of private files in respective service containers of the microservices correspondingly.

An embodiment in accordance with another aspect of the present disclosure provides an electronic device, including: a memory, a processor, and a computer program stored in the memory and executable by the processor, where the processor, when executing the program, implements: the method for sending a microservice upgrade file as described; or the method for receiving a microservice upgrade file as described.

An embodiment in accordance with another aspect of the present disclosure provides a computer-readable storage medium storing computer-executable instructions, where the computer-executable instructions are used for: executing the method for sending a microservice upgrade file as described; or executing the method for receiving a microservice upgrade file as described.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
Fig. 1 is a schematic diagram of version file and container image composition for a current microservice system upgrade;
Fig. 2 is a flowchart of a method for sending a microservice upgrade file according to an embodiment of the present disclosure;
Fig. 3 is a schematic diagram of microservice upgrade file and service container image composition in a method for sending a microservice upgrade file according to an embodiment of the present disclosure;
Fig. 4 is a flowchart of a method for receiving a microservice upgrade file according to an embodiment of the present disclosure;
Fig. 5 is a flowchart of a method for receiving a microservice upgrade file according to another embodiment of the present disclosure;
Fig. 6 is a schematic diagram of container volume sharing in a method for receiving a microservice upgrade file according to an embodiment of the present disclosure; and
Fig. 7 is a schematic diagram of an electronic device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It should be noted that although a functional module division is shown in the schematic diagrams of the device and a logical order is shown in the flowcharts, the steps shown or described may be performed, in some cases, in a different module division from that of the device or in a different order from that in the flowcharts. The terms "first", "second", "third", "fourth", etc. in the description, the claims and the above-mentioned drawings are intended to distinguish similar objects and are not necessarily to describe a specific order or sequence.

Microservice architectures are now widely used in various systems. With the microservice architectures, a function is decomposed into discrete services to decouple a solution. A large single application or service is usually split into several or even dozens of microservices.

At present, to realize a version upgrade of a microservice system, typically, each microservice upgrade file is separately stored as a version file, and then all the version files are packaged into a final version file to be released for upgrading. Because of the large number of microservices, the number of version files is large, which will lead to a large final version file and a long time to transmit the final version file. As a result, the upgrade file takes up a lot of disk space and the upgrading efficiency is low.

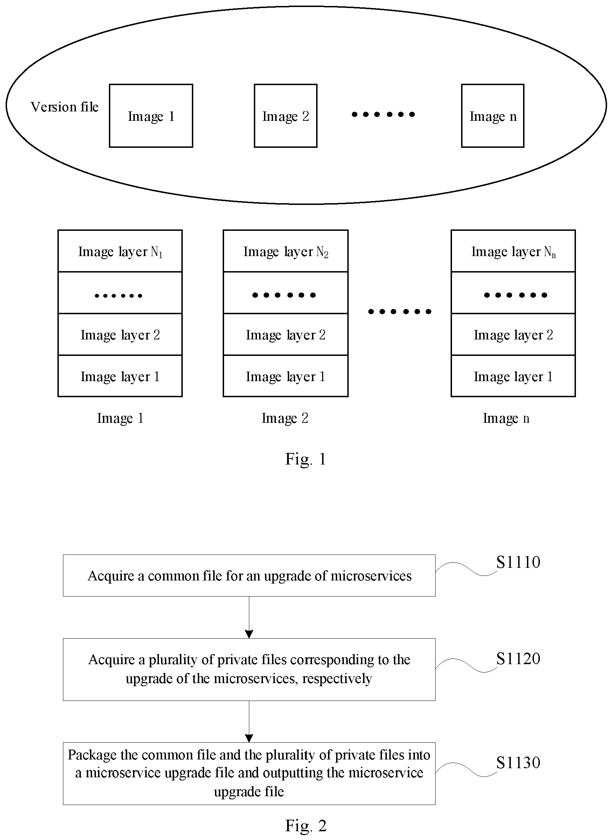

For example, the microservice architecture and a container technology are adopted in a wireless base station. At present, to realize a version upgrade of the wireless base station, a background device usually stores each container image separately as a version, and then packages all the container versions into a version file to be released for upgrading. Because of the large number of microservices, the number of container versions is large, which will lead to a large file size of a whole version package and a long time to transmit the version file. As a result, a lot of disk space is occupied and the upgrading efficiency is low. Referring to Fig. 1, currently, provided in a version file used for a microservice upgrade are container image files (image 1 to image n) of respective microservices. The container image file is formed by stacking files layer by layer. When these container images are exported separately for storage, files in all the layers must be included. Although the image files may have different numbers of image layers, for example, image 1 contains Niimage layers from image layer 1 to image layer N₁, image 2 contains N₂ image layers from image layer 1 to image layer N₂, and mirror n contains Nₙ image layers from image layer 1 to image layer Nₙ, but these container images contain the same common files in some image layers, such as some common library files and some common tool files, which will cause the existence of many duplicate image files in the version package, thus inevitably leading to larger version files. Referring to Fig. 1, it is possible that the image layer 1 of the image 1 and the image layer 1 of the image 2 are the same common file, but when they are saved as separate image files, both mirror 1 and mirror 2 must contain the common file of the image layer 1, otherwise, these image files will not be able to be imported and a container will not run normally.

Based on this, embodiments of the present disclosure provide methods for sending and receiving a microservice upgrade file, a device and a storage medium, which can effectively reduce the storage space occupied by the microservice upgrade file and improve the microservice upgrade efficiency.

It should be noted that in the following various embodiments, a microservice system uses the container technology to realize microservices. That is, the function of the whole microservice system is divided into multiple microservices, and each microservice runs in a separate service container.

An embodiment in accordance with an aspect of the present disclosure provides a method for sending a microservice upgrade file is applied to a background device side.

### Implementation 1A

Referring to Fig. 2, the method for sending a microservice upgrade file according to this implementation includes the following steps.

At S1110, a common file for an upgrade of microservices is acquired.

At S1120, a plurality of private files corresponding to the upgrade of the microservices, respectively, are acquired.

At S1130, the common file and the plurality of private files are packaged into a microservice upgrade file for output.

In some embodiments, the method according to Implementation 1A is applied to a background device which releases the upgrade file. Here, the background device may be a background server or a background terminal device. The background server may be a remote cloud server or a local server. The background terminal device may be a mobile terminal device or a non-mobile terminal device. The mobile terminal device may be a mobile phone, a tablet computer, a notebook computer, a palm computer, a vehicle-mounted terminal device, a wearable device, a super mobile personal computer, a netbook or a personal digital assistant, etc. The non-mobile terminal device may be a personal computer, a television, a teller machine or a self-service machine, etc. The embodiments of the present disclosure are not specifically limited.

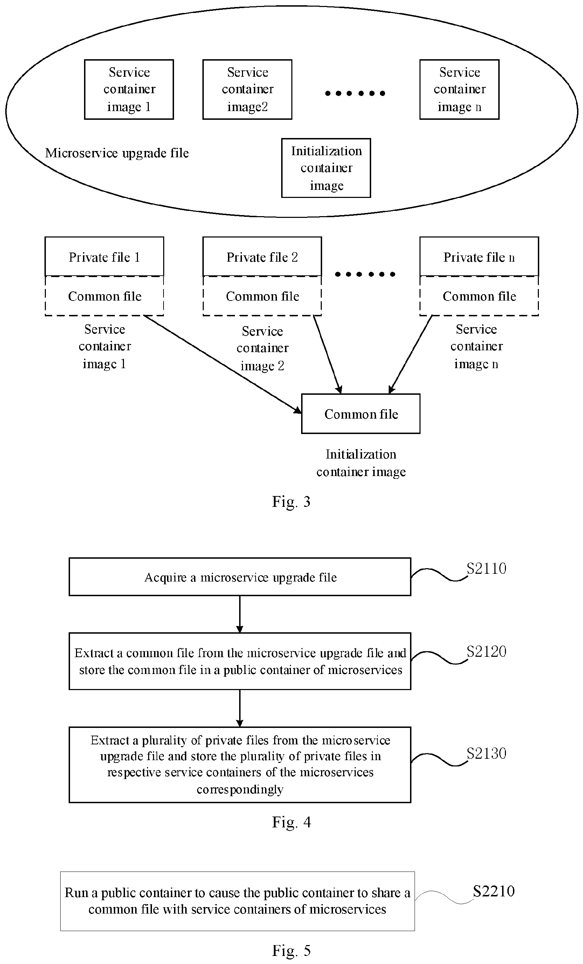

Referring to Fig. 3, for step S1110, in some embodiments, the common file is a same file that each service container image contains in a certain image layer, such as some common library files and some common tools; and the common file may also be a same file that some service container images contain in some image layers. The common file includes common library files (such as "lib" directory files) and common tool files (such as "tools" directory files). The common file can be saved as a microservice initialization container image (init container image) for an initialization container in the microservice system to run, and shared among the service containers. See Implementation 2B below for the corresponding microservice running process. For example, in a microservice upgrade file corresponding to n microservices, there are an initialization container image and service container images 1 to n, and a common file in the service container images 1 to n is extracted and stored in the initialization container image.

For step S1120, in some embodiments, the private files are private images corresponding to respective service containers of microservices, that is, unique files contained in each service container image in some image layers. The private files may be private images corresponding to respective service containers of microservices, that is, images from original service container images except the common file. For example, in a microservice upgrade file corresponding to n microservices, there are an initialization container image and service container images 1 to n, a common file in the service container images 1 to n is extracted and stored in the initialization container image, and only corresponding private files 1 to n are reserved in the service container images 1 to n.

For step S1130, in some embodiments, the background device packages the common file and the plurality of private files into the microservice upgrade file and outputs the microservice upgrade file. In the whole microservice upgrade file, only one copy of common file is saved, and there are no duplicate files, which can effectively reduce the size of the microservice upgrade file. Obviously, a small number (less than the number of the service containers) of copies of the common file can be saved, which can also reduce the size of the microservice upgrade file.

### Example:

Take a wireless base station adopting the microservice architecture and the container technology as an example. The wireless base station is divided into 32 microservice programs, and each microservice program has a separate container image. According to original container image composition, these images all contain a "tools" directory file and a "lib" directory file, where the "tools" directory file is 14 MB, and the "lib" directory file is 23 MB. In this way, the whole version contains duplicate files of 32×(14+23)=1184 MB

Using the method of this implementation, two common files, the "tools" directory file and the "lib" directory file, are placed in the initialization container image. The original 32 microservice images no longer contain these directory files. Only one copy of the "tools" directory file and one copy of the "lib" directory file are saved, and the storage or message space occupied is (14+23)=37 MB, which is 1184-37=1147 MB less than the original upgrade file.

The method of this implementation can effectively reduce the storage and message space occupied by the microservice upgrade file, and improve the transmission speed, thus improving the microservice upgrade efficiency.

An embodiment in accordance with another aspect of the present disclosure provides a method for receiving a microservice upgrade file, which is applied to a microservice side. where the microservice side may be a device or service platform with a microservice architecture, such as a base station with a microservice architecture, a terminal device with a microservice architecture, and a platform server with a microservice architecture.

### Implementation 2A

Referring to fig. 4, the method for receiving a microservice upgrade file according to this implementation includes the following steps.

At S2110, a microservice upgrade file is acquired, the microservice upgrade file including a common file and a plurality of private files.

At S2120, the common file is extracted from the microservice upgrade file and stored in a public container of microservices.

At S2130, the plurality of private files are extracted from the microservice upgrade file and stored in respective service containers of the microservices correspondingly.

In some embodiments, corresponding to the method for sending a microservice upgrade file described in Implementation 1A, this implementation receives, from the microservice side, a microservice upgrade file released by the background device side through step S2110, and the microservice upgrade file may be a microservice upgrade file released by the background device side after executing steps S1110 to S1130 in Implementation 1A.

For step S2120, in some embodiments, the public container of the microservices is an initialization container of the microservices, the common file is a same file that each service container image contains in a certain image layer, such as some common library files and some common tools; and the common file may also be a same file that some service container images contain in some image layers. The common file includes common library files (such as "lib" directory files) and common tool files (such as "tools" directory files). The common file can be saved as a microservice initialization container image (init container image) for an initialization container in the microservice system to run, and shared among the service containers. See Implementation 2B below for the corresponding microservice running process.

For step S2130, in some embodiments, the private files are private images corresponding to respective service containers of microservices, that is, unique files contained in each service container image in some image layers. The private files may be private images corresponding to respective service containers of microservices, that is, images from original service container images except the common file.

By adopting the method for receiving a microservice upgrade file in this implementation, in the whole microservice upgrade file, only one copy of common file is saved, and there are no duplicate files, which can effectively reduce the storage space occupied by the microservice upgrade file. Obviously, a small number (less than the number of the service containers) of copies of the common file can be saved, which can also reduce the size of the microservice upgrade file.

### Implementation 2B

Referring to Fig. 5, compared with the method for receiving a microservice upgrade file in Implementation 2A, the method for receiving a microservice upgrade file in this implementation further includes the following step.

At S2210, the public container is run to cause the public container to share the common file with the service containers of the microservices, so as to enable the service containers of the microservices to start running.

For step S2130, in some embodiments, the public container of the microservices is an initialization container of the microservices, the common file is a same file that each service container image contains in a certain image layer, such as some common library files and some common tools; and the common file may also be a same file that some service container images contain in some image layers. The common file includes common library files (such as "lib" directory files) and common tool files (such as "tools" directory files).

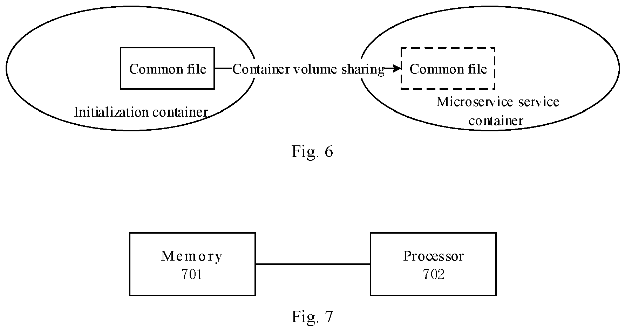

As shown in Fig. 6, the common file can be saved as a microservice initialization container image (init container image) for an initialization container in the microservice system to run, and shared among the service containers of the microservices in the form of container volumes.

In some embodiments, when running a certain microservice container, an init container (initialization container) is run first, and the init container shares the common file with the microservice container in the form of container volumes. Although the image (private image ) of the microservice service container itself does not contain these common files, the microservice service container can still use these files normally and run normally because the init container shares these files.

### Implementation:

Take a wireless base station adopting the microservice architecture and the container technology as an example. The wireless base station is divided into 32 microservice programs, each microservice program runs in a separate service container (that is, there are 32 microservice service containers), and each service container corresponds to a separate service container image. Assuming that the common file includes "tools" directory files and "lib" directory files, now a certain microservice service container is ready to be started, for example, a database microservice is to be started: the init container (initialization container) is started first, and the init container shares "tools" directories and "lib" directories with a database container in the form of container volumes. Based on the common file shared by the init container, together with the private files (private images) of the database container, a complete image of the database container is formed, so that the database container can be started normally.

The method of this implementation can effectively reduce the storage and message space occupied by the microservice upgrade file, and improve the transmission speed, thus improving the microservice upgrade efficiency and ensuring the normal starting and running of the microservices.

Referring to Fig. 7, an embodiment in accordance with another aspect of the present disclosure provides an electronic device, including: a memory 701, a processor 702, and a computer program stored in the memory 701 and executable by the processor 702, where the processor 702, when executing the program, implements: the method for sending a microservice upgrade file as described in Implementation 1A; or, the method for receiving a microservice upgrade file as described in Implementation 2A or Implementation 2B.

An embodiment in accordance with another aspect of the present disclosure provides a computer-readable storage medium storing computer-executable instructions, where the computer-executable instructions are used for: executing the method for sending a microservice upgrade file as described in Implementation 1A; or, executing the method for receiving a microservice upgrade file as described in Implementation 2A or Implementation 2B.

The embodiments of the present disclosure include: extracting a common file for an upgrade of microservices and a plurality of private files corresponding to the upgrade of the microservices, respectively, and packaging the common file and the plurality of private files into a microservice upgrade file and outputting the microservice upgrade file. According to the scheme provided by the embodiments of the present disclosure, only one or a few copies of the common file in the microservice upgrade files are saved, which can effectively reduce the storage space occupied by the microservice upgrade file and improve the microservice upgrade efficiency.

The embodiments of the present disclosure provide the methods for sending and receiving a microservice upgrade file, the device and the storage medium, which can effectively reduce the storage space occupied by the microservice upgrade file and improve the microservice upgrade efficiency.

The above-described device embodiments are only schematic, in which the units illustrated as separate components may or may not be physically separated, that is, they may be located in one place or distributed over multiple network units. Some or all of the modules can be selected according to actual needs to achieve the purpose of this embodiment.

It can be understood by those having ordinary skill in the art that all or some of the steps of the methods and systems disclosed above can be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application specific integrated circuit. Such software can be distributed on computer-readable media, which can include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and can include any information transmission media.

The above is a detailed description of some embodiments of the present disclosure, but the present disclosure is not limited to the above-mentioned embodiments. Those having ordinary skill in the art can also make various equivalent modifications or replacements without departing from the scope of the present disclosure, and these equivalent modifications or replacements are all included in the scope defined by the claims of the present disclosure.

## Claims

1. A method for sending a microservice upgrade file, comprising:
acquiring a common file for an upgrade of microservices;
acquiring a plurality of private files corresponding to the upgrade of the microservices, respectively; and
packaging the common file and the plurality of private files into a microservice upgrade file and outputting the microservice upgrade file.

2. The method of claim 1, wherein the common file is a microservice initialization container image, and the plurality of private files are private images corresponding to respective service containers of the microservices.

3. The method of claim 1 or claim 2, wherein the common file comprises common library files and common tool files.

4. A method for receiving a microservice upgrade file, comprising:
acquiring a microservice upgrade file, the microservice upgrade file comprising a common file and a plurality of private files;
extracting the common file from the microservice upgrade file and storing the common file in a public container of microservices; and
extracting the plurality of private files from the microservice upgrade file and storing the plurality of private files in respective service containers of the microservices correspondingly.

5. The method of claim 4, wherein the public container of the microservices is a microservice initialization container; and the common file comprises common library files and common tool files.

6. The method of claim 4 or claim 5, further comprising:
running the public container to cause the public container to share the common file with the service containers of the microservices, so as to enable the service containers of the microservices to start running.

7. The method of claim 6, wherein causing the public container to share the common file with the service containers of the microservices comprises:
causing the public container to share the common file with the service containers of the microservices in the form of container volumes.

8. An electronic device, comprising: a memory, a processor, and a computer program stored in the memory and executable by the processor, wherein the processor, when executing the program, implements:
the method for sending a microservice upgrade file of any one of claims 1 to 3;
or,
the method for receiving a microservice upgrade file of any one of claims 4 to 7.

9. A computer-readable storage medium storing computer-executable instructions, wherein the computer-executable instructions are used for:
executing the method for sending a microservice upgrade file of any one of claims 1 to 3;
or,
executing the method for receiving a microservice upgrade file of any one of claims 4 to 7.
